Europäisches Patentamt

European Patent Office

Office européen des brevets

(19)

(11) Veröffentlichungsnummer: **0 185 850**
**A2**

(12) # EUROPÄISCHE PATENTANMELDUNG

(21) Anmeldenummer: **85111279.7**

(22) Anmeldetag: **06.09.85**

(51) Int. Cl.⁴: **B 23 B 5/32**

(30) Priorität: **22.12.84 DE 8437708 U**

(43) Veröffentlichungstag der Anmeldung:
**02.07.86 Patentblatt 86/27**

(84) Benannte Vertragsstaaten:
**AT BE CH DE FR GB IT LI LU NL SE**

(71) Anmelder: **Hoesch Aktiengesellschaft**
**Eberhardstrasse 12**
**D-4600 Dortmund 1(DE)**

(72) Erfinder: **Gutöhrlein, Uwe, Dipl.-Ing.**
**Welteweg 9**
**D-4600 Dortmund 30(DE)**

(72) Erfinder: **Rosenthal, Jürgen, Dipl.-Ing.**
**Langernstrasse 23**
**D-4712 Werne(DE)**

(54) **Unterflur-Radsatzdrehmaschine zum Reprofilieren der Radreifenumrisse von Eisenbahn-Radsätzen.**

(57) Bei einer Unterflur-Radsatzdrehmaschine zum Reprofilieren der Radreifenumrisse von Eisenbahn-Radsätzen, mit
zwei Drehsupporten und vier angetriebenen Reibrollen, von
denen je zwei Reibrollen mit je einer Umfangsfläche an einen
Radreifen andrückbar sind, wobei die Reibrollen einzeln um
je eine parallel zur Radsatzachse angeordnete Schwenkachse
schwenkbar sind, werden, um das Reprofilieren in kürzerer
Zeit zu ermöglichen, die Umfangsflächen (60, 61) zweier
Reibrollen (11, 12) gegenüber den Umfangsflächen (57, 58)
der anderen beiden Reibrollen (9, 10) weiter entfernt von der
Radsatzmitte (64) angeordnet.

EP 0 185 850 A2

./...

Fig.1

Hoesch Aktiengesellschaft, Eberhardstraße 12, 4600 Dortmund 1


Unterflur-Radsatzdrehmaschine zum Reprofilieren der Radreifenumrisse von Eisenbahn-Radsätzen


Die Neuerung bezieht sich auf eine Unterflur-Radsatzdrehmaschine zum Reprofilieren der Radreifenumrisse von Eisenbahn-Radsätzen, mit zwei Drehsupporten und vier angetriebenen Reibrollen, von denen je zwei Reibrollen mit je einer Umfangsfläche an einen Radreifen andrückbar sind, wobei die Reibrollen einzeln um je eine parallel zur Radsatzachse angeordnete Schwenkachse schwenkbar sind.

Eine Unterflur-Radsatzdrehmaschine der vorgenannten Art ist durch die FR-PS 1 269 726 bekannt.

Bei dieser Unterflur-Radsatzdrehmaschine sind die Umfangsflächen der Reibrollen gleich ausgebildet und in dem gleichen Abstand zu der Radsatzmitte angeordnet.

Auf einer solchen Unterflur-Radsatzdrehmaschine ist die Reprofilierung der Radreifenumrisse in den Radreifenbereichen, wo die Reibrollen in dem Ausmaß der Schnittiefe in Richtung zur Radsatzachse gleichzeitig verschwenkt werden, nur mit geringer Spanleistung möglich, weil jede Reibrolle während ihrer Verschwenkung aus dem abgelaufenen zu dem gedrehten Radreifenbe-

0185850

reich lediglich eine kleine Reibkraft auf den Radreifen übertragen kann.

Hierdurch wird die Zeit für das Reprofilieren der beiden Radreifenumrisse eines Radsatzes ungünstig beeinflußt.

Der Neuerung liegt die Aufgabe zugrunde, eine Unterflur-Radsatzdrehmaschine der eingangs genannten Art so auszuführen, daß das
Reprofilieren der beiden Radreifenumrisse eines Radsatzes in
kürzerer Zeit ermöglicht wird.

Neuerungsgemäß wird diese Aufgabe dadurch gelöst, daß die Umfangsflächen zweier Reibrollen gegenüber der Umfangsflächen der
anderen beiden Reibrollen weiter entfernt von der Radsatzmitte
angeordnet sind.

Im folgenden wird die Neuerung anhand einer Zeichnung, in der
ein Ausführungsbeispiel schematisch dargestellt ist, näher beschrieben.

Es zeigen

Fig. 1   eine Unterflur-Radsatzdrehmaschine und einen von ihr
         aufgenommenen Radsatz in Ansicht mit einer Teilansicht
         eines auf dem Radsatz aufliegenden Fahrzeugaufbaus und
         mit einem Teilschnitt durch ein Fundament,

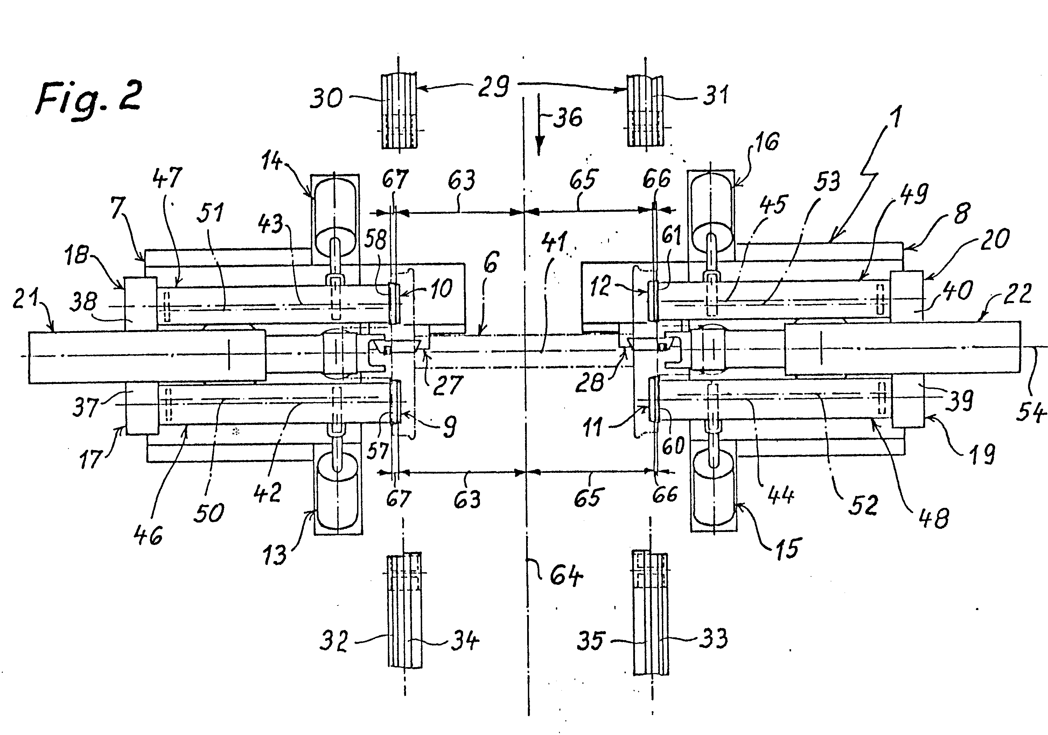

Fig. 2   die Unterflur-Radsatzdrehmaschine im Grundriß mit strichpunktierter Darstellung des Radsatzes,

Fig. 3   einen Schnitt entsprechend der Linie III-III in Fig. 1
in vergrößertem Maßstab,

Fig. 4   zwei Teilausschnitte A der Fig. 1 in vergrößertem
Maßstab,

Fig. 5 bis 9 Teilausschnitte B, C, D, E und F in Anlehnung an Fig. 4
in fünf verschiedenen Reprofilierungsphasen.

Eine Unterflur-Radsatzdrehmaschine 1, die fest mit einem Fundament 2 verbunden ist, wird eingesetzt zum Reprofilieren der
Radreifenumrisse 3, 4 eines in einem Schienenfahrzeug 5 eingebauten Radsatzes 6.

Die Unterflur-Radsatzdrehmaschine 1 besitzt zwei Maschineneinheiten 7, 8, von denen jede zwei Reibrollen 9, 10, 11, 12, zwei
Schwenk- (13, 14, 15, 16) und zwei Drehantriebe 17, 18, 19, 20
für die Reibrollen 9, 10, 11, 12, eine Niederhalte- (21, 22)
und eine Stützvorrichtung 23, 24 für einen Achslagerkasten 25,
26 des Radsatzes 6 sowie einen Drehsupport 27, 28 enthält.

Zu der Unterflur-Radsatzdrehmaschine 1 gehört ein Fahrgleis 29
mit je zwei Ein- (30, 31) und Auslaufschienen 32, 33 sowie
zwei Überbrückungsschienen 34, 35 zum Überbrücken des Bereichs
zwischen den Ein- (30, 31) und Auslaufschienen 32, 33.

Die Überbrückungsschienen 34, 35 sind in Fahrgleisrichtung 36 verschiebbar angeordnet, damit sie aus dem Arbeitsbereich der Drehsupporte 27, 28 entfernt werden können.

Die Drehbewegung der Reibrollen 9, 10, 11, 12 erzeugen vier Hydromotoren 37, 38, 39, 40.

Jede Reibrolle 9, 10, 11, 12 hat eine parallel zur Radsatzachse 41 verlaufende Drehachse 42, 43, 44, 45.

Jeder Drehantrieb 17, 18, 19, 20 wird gehalten durch eine Schwinge 46, 47, 48, 49.

Die Schwingen 46, 47, 48, 49 sind einzeln um je eine parallel zur Radsatzachse 41 angeordnete Schwenkachse 50, 51, 52, 53 schwenkbar und jeweils an einen Schwenkantrieb 13, 14, 15, 16 gelenkig angeschlossen.

Beim Einbringen des Radsatzes 6 in die Unterflur-Radsatzdrehmaschine 1 wurde er zunächst über die Einlauf- (30, 31) und die Überbrückungsschienen 34, 35 in Fahrgleisrichtung 36 bis zur Maschinenmitte 54 gerollt. Danach wurde der Radsatz 6 durch Verschwenken der Reibrollen 9, 10, 11, 12 in Richtung zur Radsatzachse 41 etwas über das Fahrgleisniveau angehoben.

In der angehobenen Stellung des Radsatzes 6 wurden nacheinander die Überbrückungsschienen 34, 35 in Fahrgleisrichtung 36 aus dem Arbeitsbereich der Drehsupporte 27, 28 bewegt und die beiden Achslagerkästen 25, 26 des Radsatzes 6 durch die Niederhalte- (21, 22) und die Stützvorrichtungen 23, 24 arretiert
(Fig. 1 und 3).

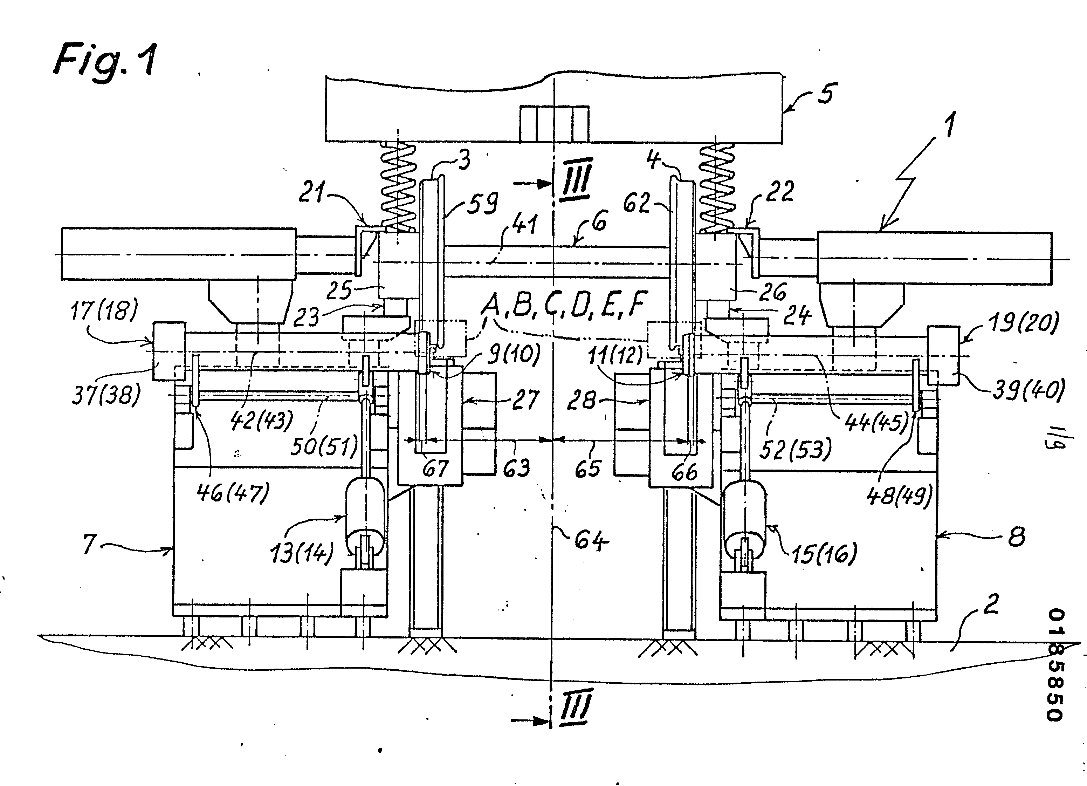

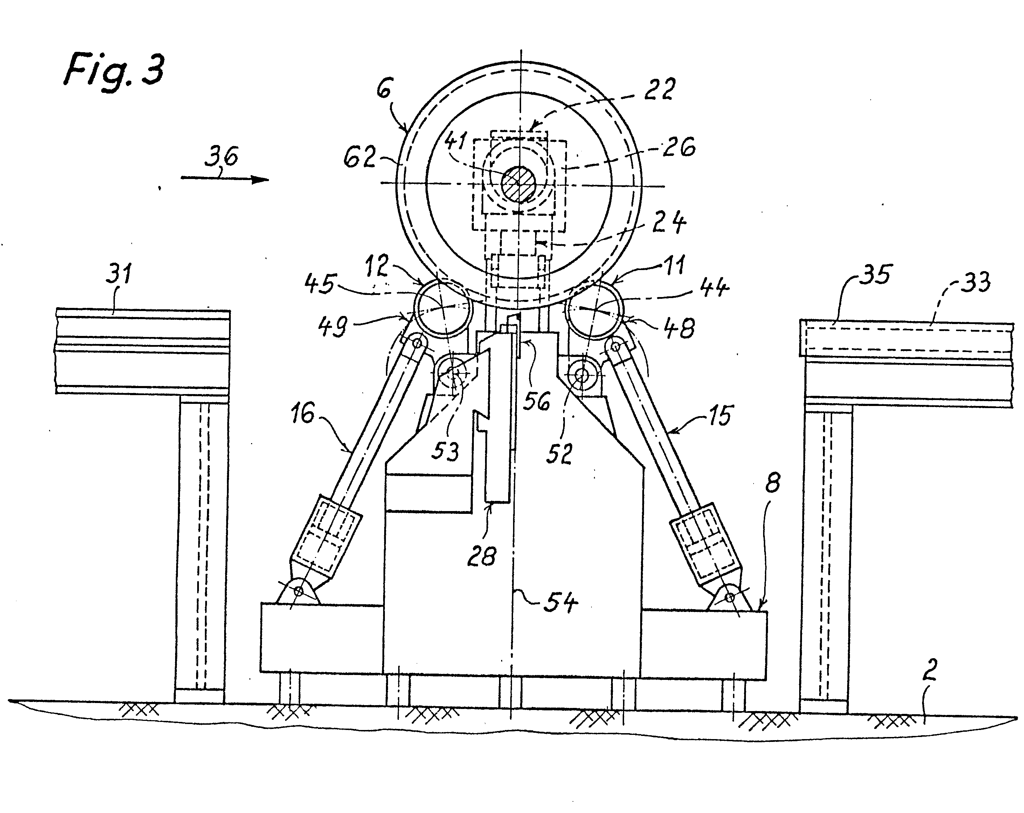

In der in den Fig. 1 und 3 dargestellten Position des Radsatzes
6 erfolgt die Reprofilierung der Radreifenumrisse 3, 4 durch
die Drehsupporte 27, 28, die je mit einem Drehwerkzeug 55, 56
bestückt sind.

Von den vier angetriebenen Reibrollen 9, 10, 11, 12 greifen
zwei (9, 10) mit je einer Umfangsfläche 57, 58 an dem linken
Radreifen 59 und zwei (11, 12) mit je einer Umfangsfläche 60,
61 an dem rechten Radreifen 62 an.

Jede Umfangsfläche 57, 58, 60, 61 ist als Mantelfläche eines
abgestumpften Kegels aufzufassen.

Die Umfangsflächen 60, 61 der Reibrollen 11, 12 sind etwa um
die Hälfte schmaler als die Umfangsflächen 57, 58 der Reibrollen 9, 10.

Die Umfangsflächen 57, 58 der Reibrollen 9, 10 sind in einem
Abstand 63 zur Radsatzmitte 64 angeordnet.

Die Umfangsflächen 60, 61 der Reibrollen 11, 12 haben zur Radsatzmitte 64 einen Abstand 65, der in dem Maße größer ist als
der Abstand 63, wie die Breite 66 einer Umfangsfläche 60, 61 im Vergleich zu der Breite 67 einer Umfangsfläche 57, 58 schmaler ist.

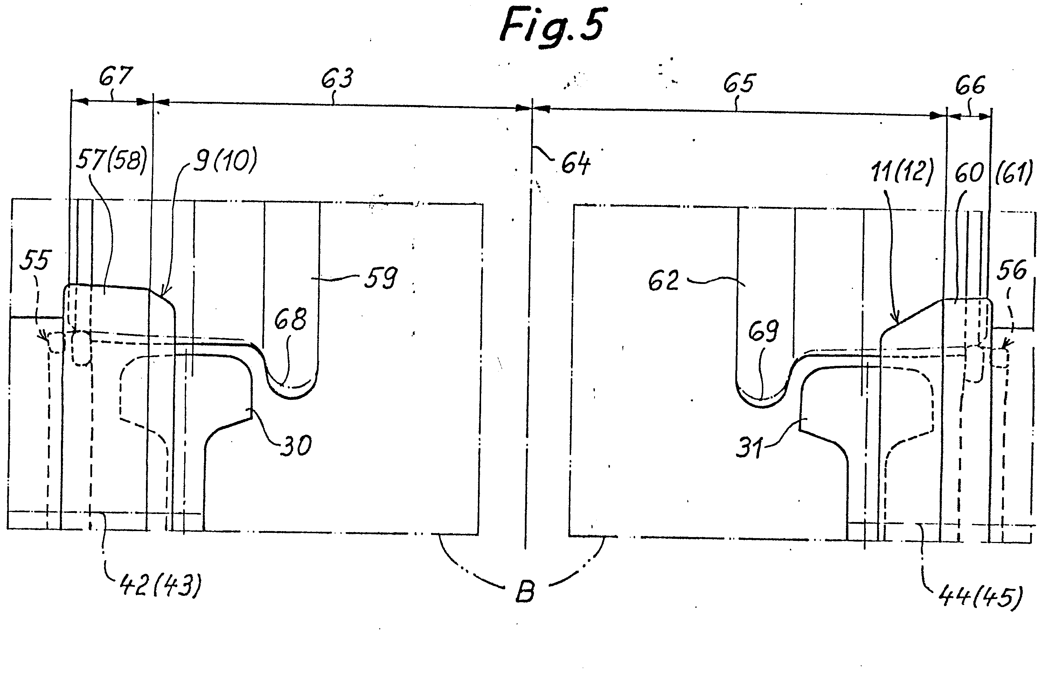

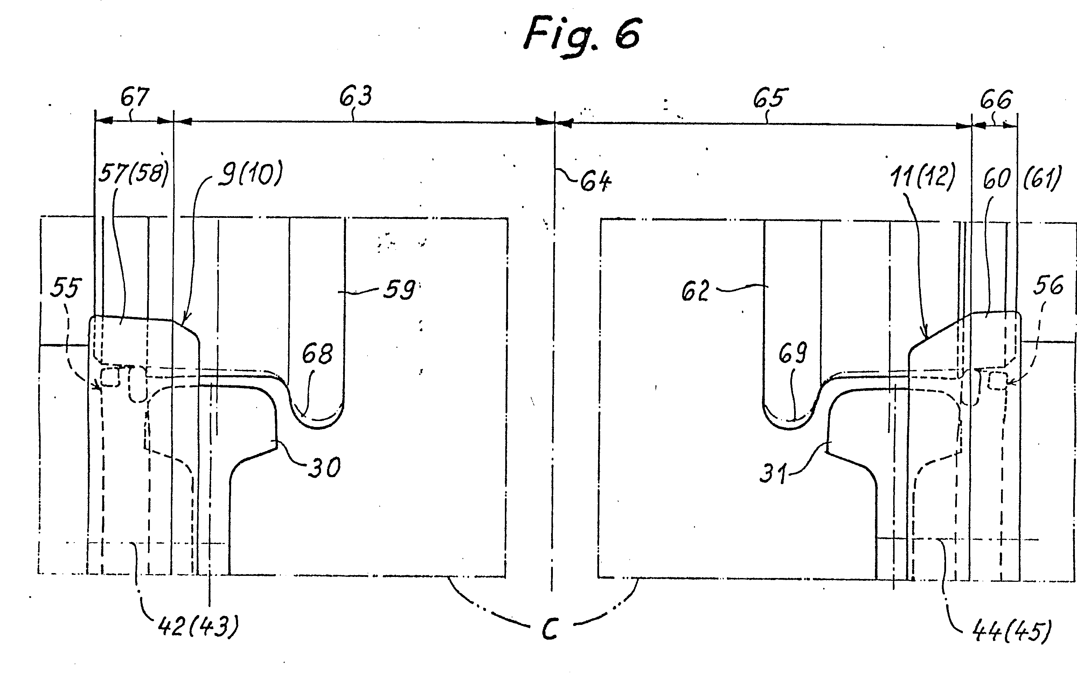

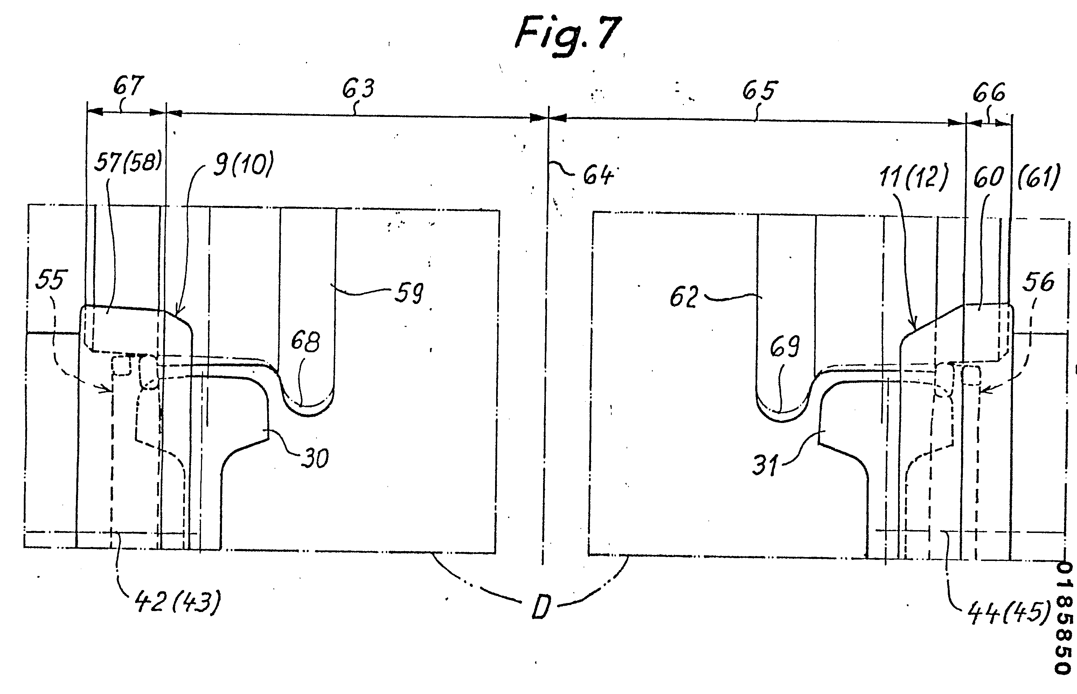

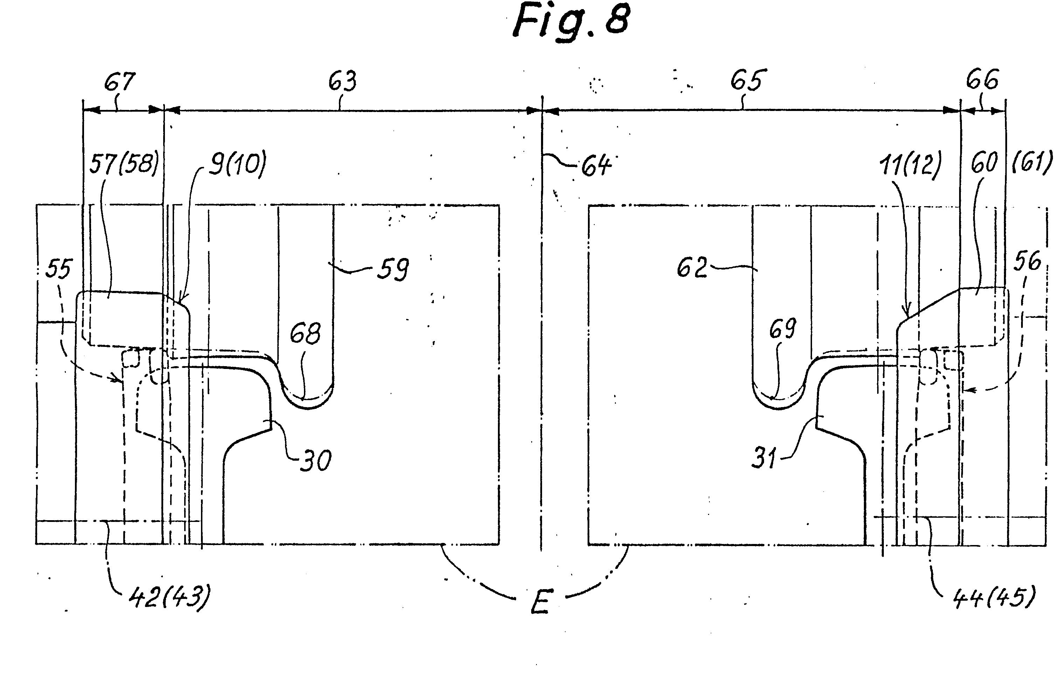

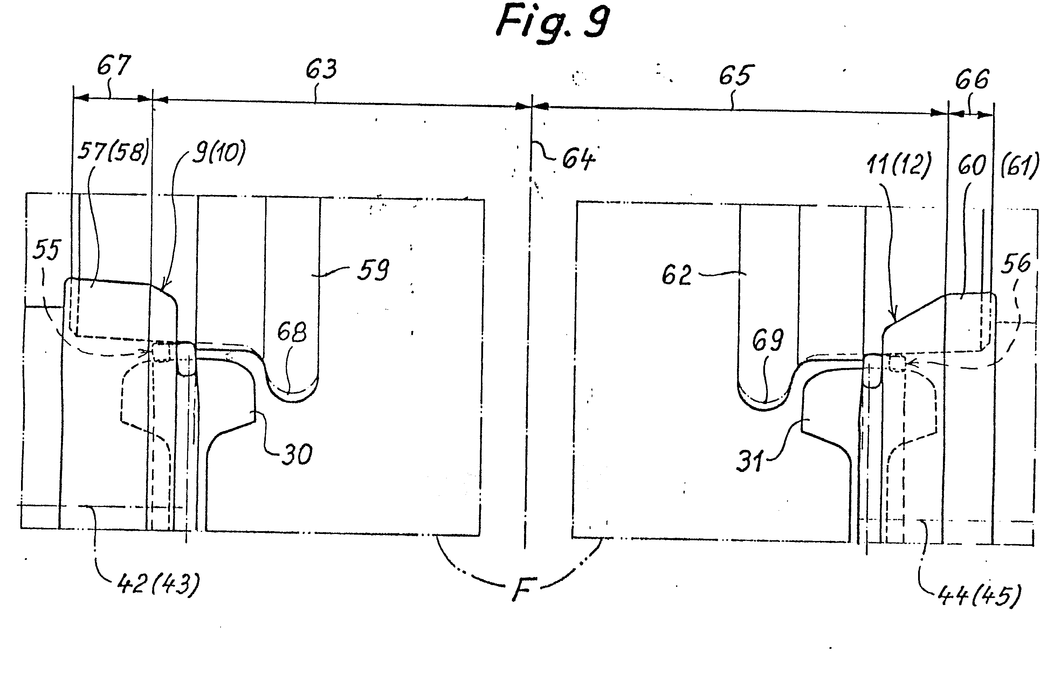

Durch die unterschiedlichen Abstände 63, 65 der Umfangsflächen 57, 58, 60, 61 zur Radsatzmitte 64 wird sichergestellt, daß von den vier Reibrollen 9, 10, 11, 12 mindestens zwei davon ihre volle Reibkraft auf den Radsatz 6 übertragen können (Fig. 5 bis 9).

Werden die Umfangsflächen 57, 58, 60, 61 in vier verschiedenen Abständen zur Radsatzmitte 64 angeordnet, können von den vier Reibrollen 9, 10, 11, 12 mindestens drei davon ihre volle Reibkraft auf den Radsatz 6 übertragen.

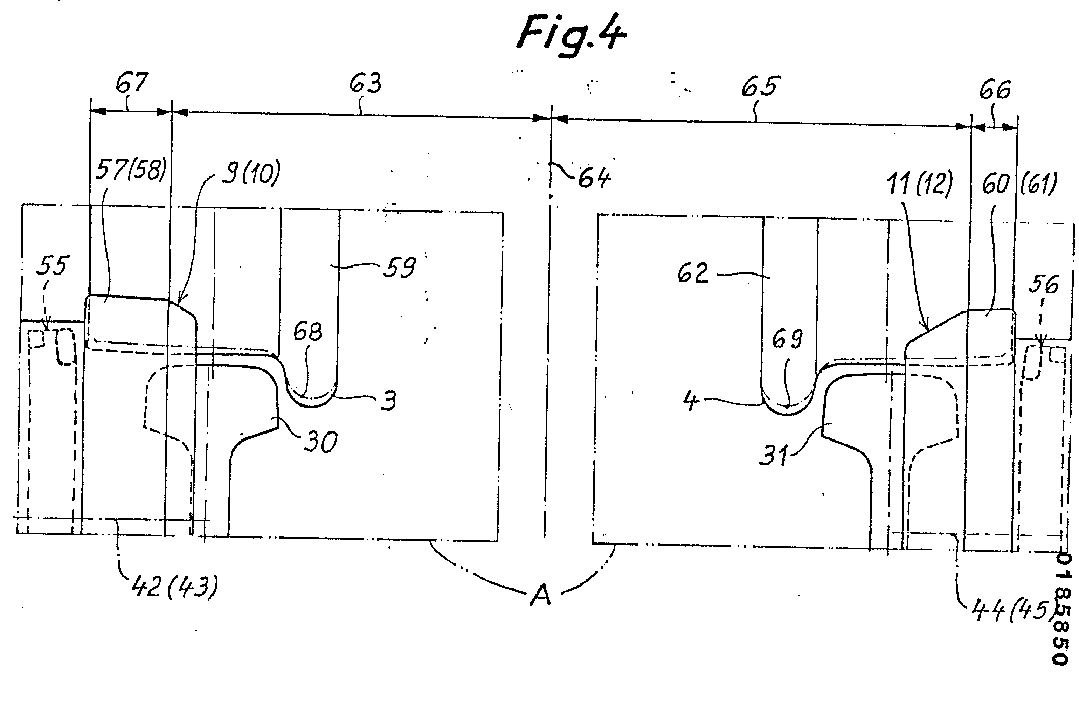

Während des Reprofilierungsvorganges schneiden die beiden Drehwerkzeuge 55, 56 je ein neues Radreifenprofil 68, 69 (Fig. 4 bis 9).

Nach der Reprofilierung der Radreifenumrisse 3, 4 werden nacheinander die Drehsupporte 27, 28 aus ihrem Arbeitsbereich zurückgefahren, die Überbrückungsschienen 34, 35 in den Bereich zwischen die Ein- (30, 31) und die Auslaufschienen 32, 33 bewegt und der Radsatz 6 durch Verschwenken der Reibrollen 9, 10, 11, 12 auf die Überbrückungsschienen 34, 35 abgesenkt.

Anschließend wird der Radsatz 6 über die Überbrückungs- (34, 35) und die Auslaufschienen 32, 33 aus der Unterflur-Radsatzdrehmaschine 1 gerollt. Hiernach steht die Unterflur-Radsatzdrehmaschine 1 zur Reprofilierung der Radreifenumrisse eines anderen Radsatzes zur Verfügung.

Hoesch Aktiengesellschaft, Eberhardstraße 12, 4600 Dortmund 1

7

Schutzanspruch:

Unterflur-Radsatzdrehmaschine zum Reprofilieren der Radreifenumrisse von Eisenbahn-Radsätzen, mit zwei Drehsupporten und vier angetriebenen Reibrollen, von denen je zwei Reibrollen mit je einer Umfangsfläche an einen Radreifen andrückbar sind, wobei die Reibrollen einzeln um je eine parallel zur Radsatzachse angeordnete Schwenkachse schwenkbar sind, dadurch gekennzeichnet, daß die Umfangsflächen (60, 61) zweier Reibrollen (11, 12) gegenüber den Umfangsflächen (57, 58) der anderen beiden Reibrollen (9, 10) weiter entfernt von der Radsatzmitte (64) angeordnet sind.

Fig.1

A, B, C, D, E, F

Fig. 2

0185850

0185850

Fig.3

*Fig.4*

# Fig.5

*Fig. 6*

Fig.7

# Fig.8

67   63   65   66

57(58)   9(10)   64   11(12)   60 (61)

55   59   62   56

68   69

30   31

42(43)   E   44(45)

8/9

0185850

# Fig. 9

67    63    65    66

57(58)    9(10)    64    11(12)    60 (61)

55    59    62    56    9/9

68    69

30    31

42(43)    F    44(45)

0185850